# EUROPEAN PATENT APPLICATION

(11) **EP 4 576 297 A1**
(43) Date of publication of application: **25.06.2025**
(21) Application number: 24212692.8
(22) Date of filing: 13.11.2024
(51) Int. Cl.: H01M 10/05, H01M 50/103, H01M 50/119, H01M 50/129, H01M 50/296, H01M 50/342, H01M 50/358, H01M 50/105, H01M 50/134

(54) **SECONDARY BATTERY**

(30) Priority: 18.12.2023 KR 20230184087
(71) Applicant: SAMSUNG SDI CO., LTD., Yongin-si, Gyeonggi-do 17084 (KR)
(72) Inventor: Heo, Ung Kuk, Yongin-si, Gyeonggi-do 17084 (KR)
(74) Representative: Gulde & Partner

(57) **Abstract**

A secondary battery having a structure in which a vent having a low coupling force due to fusion is provided in a sealed portion such that the vent is easily broken if a secondary battery made of stainless steel (SUS) or steel with a plating layer formed on the surface thereof is expanded by internal pressure, thereby improving safety. The secondary battery includes an electrode assembly having a positive electrode plate, a negative electrode plate, and a separator between the positive electrode plate and the negative electrode plate and a case configured to receive the electrode assembly. The case includes a metal layer and a sealed portion sealed by fusion on at least three sides. The sealed portion includes at least one vent.

## Description

### BACKGROUND

### 1. Field

Embodiments relate to a secondary battery.

### 2. Description of the Related Art

A secondary battery is a power storage system that converts electrical energy into chemical energy, stores the chemical energy, and provides high energy density. Compared to a primary battery, which is not rechargeable, a secondary battery is rechargeable and is widely used in IT devices such as a smartphone, a cellular phone, a laptop computer, and a tablet computer. Recently, there has been an increased interest in electric vehicles to prevent environmental pollution, and a high-capacity secondary battery is being adopted in electric vehicles. The secondary battery requires characteristics such as high density, high output, and stability.

The information disclosed in this section is provided only for enhancement of understanding of the background of the disclosure and therefore it may contain information that does not form the prior art.

### SUMMARY

Embodiments provide a secondary battery configured to have a structure in which a vent is provided in a fusion welded sealed portion between a case cover and a case base and the vent having a lower coupling force than the sealed portion, such that the vent is easily broken when the case including a metal layer expands by internal pressure, thereby improving safety.

It should be noted that objects of the disclosure are not limited to the object as mentioned above, and other unmentioned objects of the disclosure will be clearly understood by those skilled in the art from the following description.

A secondary battery according to an embodiment includes an electrode assembly having a positive electrode plate, a negative electrode plate, and a separator disposed between the positive electrode plate and the negative electrode plate and a case configured to accommodate the electrode assembly, the case including a metal layer, wherein the case includes a sealed portion sealed by fusion (fusion welding) on at least three sides of the case, and the sealed portion is provided with at least one vent.

The metal layer may be made of stainless steel (e.g. SUS, SUS304, SAE 304 stainless steel) or steel having a plating layer formed on a surface thereof.

The vent may be located in approximately the center of the sealed portion provided at one side of the case.

The secondary battery may include a positive electrode lead tab in contact with and electrically connected to the positive electrode plate of the electrode assembly. A portion of the positive electrode lead tab is exposed outside the case. The second battery also includes a negative electrode lead tab in contact with and electrically connected to the negative electrode plate of the electrode assembly. A portion of the negative electrode lead tab is exposed outside the case. The positive electrode lead tab and the negative electrode lead tab may be exposed to the outside through the sealed portion on the same side of the case.

The vent may be between the positive electrode lead tab and the negative electrode lead tab.

The sealed portion may include a first sealed portion extending in a second direction, which is a width direction of the case. The first sealed portion may be located on one side of the case from which the positive electrode lead tab and the negative electrode lead tab are exposed. The sealed portion may also include two second sealed portions extending from one end of the first sealed portion and another end of the first sealed portion opposite to the one end. The two second sealed portions extend in a first direction, which is a longitudinal direction of the case.

The vent may be in substantially the center of the first sealed portion or substantially in the center of any one of the second sealed portions.

The vent may be in substantially the center of the second sealed portion in the first direction.

The vent may be located in substantially the center of the first sealed portion in the second direction.

The vent may be spaced apart from the center of the second sealed portion in the first direction.

The vent may be a notch in an edge of the sealed portion.

The notch of the vent may be covered by an adhesive or a UV-curable material.

The notch of the vent may be substantially perpendicular or at a predetermined angle from the edge.

The width of the sealed portion in a portion where the vent is provided may be at least approximately 50% of the width of the sealed portion in the remaining portion of the sealed portion.

A pattern of a thermally fused layer of the sealed portion at a portion where the vent is located may have a smaller width than at the remaining portion of the sealed portion.

The case may include a case body including a recess configured to receive the electrode assembly and an extension portion extending from the recess in an outward direction and a case cover coupled to the extension portion of the case body by fusion (fusion welding), and the sealed portion may be a portion where the extension portion and the case cover are coupled to each other by fusion (fusion welding).

Each of the case body and the case cover may have a multilayered structure including a stack having an inner layer made of an insulating and thermally fused layer, a metal layer made of stainless steel (e.g. SUS, SUS304, SAE 304 stainless steel) or steel with a plating layer formed on a surface thereof, and an outer layer made of an insulating material.

The vent may include two or more vents.

### BRIEF DESCRIPTION OF THE DRAWINGS

The accompanying drawings, which are incorporated in this specification, illustrate preferred embodiments and serve to further illustrate the technical ideas of the disclosure in conjunction with the detailed description of exemplary embodiments that follows, and the disclosure is not to be construed as limited to what is shown in such drawings. In the drawings:
FIG. 1 is a perspective view showing a secondary battery according to an embodiment;
FIG. 2 is an exploded perspective view of the secondary battery shown in FIG. 1;
FIG. 3 is a schematic view showing the structure of a case in the secondary battery of FIGs. 1 and 2;
FIG. 4 is an exploded perspective view showing an electrode assembly in the secondary battery of FIGs. 1 and 2;
FIG. 5 is a coupled perspective view of the electrode assembly shown in FIG. 4;
FIG. 6 is a perspective view showing another embodiment of the electrode assembly in the secondary battery of FIGs. 1 and 2;
FIG. 7 is a plan view showing the position of a vent in the secondary battery of FIGs. 1 and 2 according to one embodiment of the present disclosure; and
FIGs. 8 to 11 are plan views showing the position of the vent in the secondary battery of FIGs. 1 and 2 according to other embodiments of the present disclosure.

### DETAILED DESCRIPTION

Hereinafter, embodiments will be described in detail with reference to the accompanying drawings. It should be understood that the terms or words used in the specification and appended claims should not be construed as being limited to general and dictionary meanings, but should be construed based on meanings and concepts according to the technical idea of the disclosure on the basis of the principle that the inventor is permitted to define appropriate terms for the best explanation. Embodiments described in this specification and constructions shown in the drawings are merely the most preferred embodiments and do not speak for the entirety of the technical idea of the disclosure, and therefore it should be understood that various replaceable equivalents and modifications may be possible at the time of filing the present application. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

The accompanying drawings may not be to scale and some components may be exaggerated in dimensions in order to facilitate understanding of the disclosure. In different embodiments, the same components may be denoted by the same reference numerals.

A reference to two comparables being "identical" means that they are "substantially identical." Thus, substantially the same may include deviations that are considered low in the art, such as deviations of less than 5%. If a parameter is uniform in a given region, this may mean that the parameter is uniform from an average perspective.

Although first, second, and the like are used to describe various components, the components are not limited by these terms. These terms are used only to distinguish one component from another, and a first component may be a second component unless otherwise noted.

Throughout the specification, each component may be singular or plural unless otherwise indicated.

If any configuration is disposed "above" (or "below") a component or "on" (or "under") the component, this may mean not only that the configuration is disposed abutting an upper surface (or a lower surface) of the component, but that another configuration may be interposed between the component and the configuration disposed on (or under) the component.

It should also be understood that if a component is described as being "connected," "coupled," or "linked" to another component, the components may be directly connected or linked to each other, another component may be "interposed" between other components, or the components may be "connected," "coupled," or "linked" to each other via another component.

Throughout the specification, references to "A and/or B" mean A, B, or A and B, unless otherwise indicated, and references to "C to D" mean C or higher and D or lower, unless otherwise indicated.

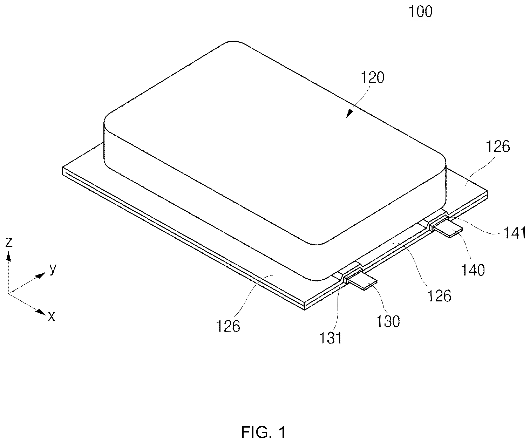

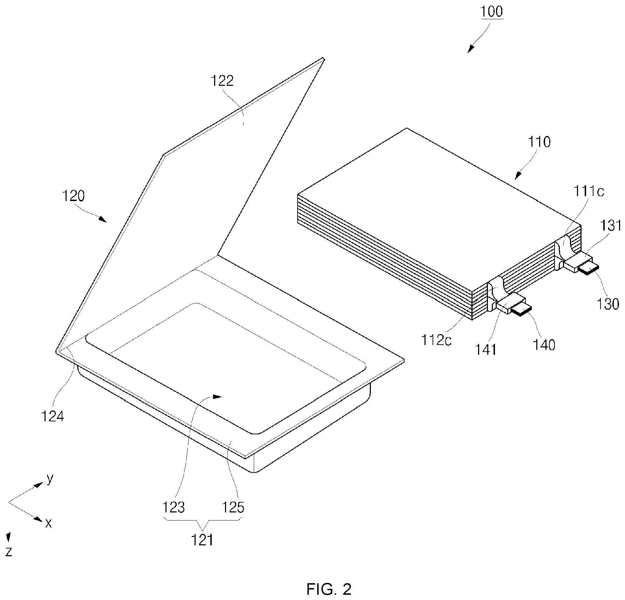

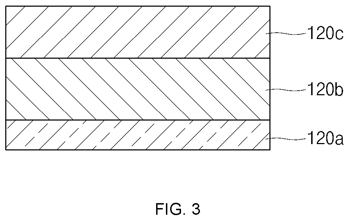

FIG. 1 is a perspective view showing a secondary battery according to an embodiment, FIG. 2 is an exploded perspective view of the secondary battery shown in FIG. 1, and FIG. 3 is a schematic view showing the structure of a case in the secondary battery of FIGs. 1 and 2.

Referring to FIGs. 1 to 3, the secondary battery 100 may include an electrode assembly 110 and a case 120.

The electrode assembly 110 may be received in the case 120 with an electrolytic solution. In one or more embodiments, the electrolytic solution may include a lithium salt, such as LiPF₆ or LiBF₄, in an organic solvent, such as ethylene carbonate (EC), propylene carbonate (PC), diethyl carbonate (DEC), ethyl methyl carbonate (EMC), or dimethyl carbonate (DMC).

The electrode assembly 110 may include a negative electrode plate, which is a first electrode plate, a positive electrode plate, which is a second electrode plate, and a separator between the positive and negative electrode plates. The positive electrode plate may include a positive electrode lead tab 130 electrically connected to a positive electrode uncoated portion, and the negative electrode plate may include a negative electrode lead tab 140 electrically connected to a negative electrode uncoated portion. A first insulating tape 141 for insulation from the case 120 may be attached to the negative electrode lead tab 140, and a second insulating tape 131 for insulation from the case 120 may be attached to the positive electrode lead tab 130.

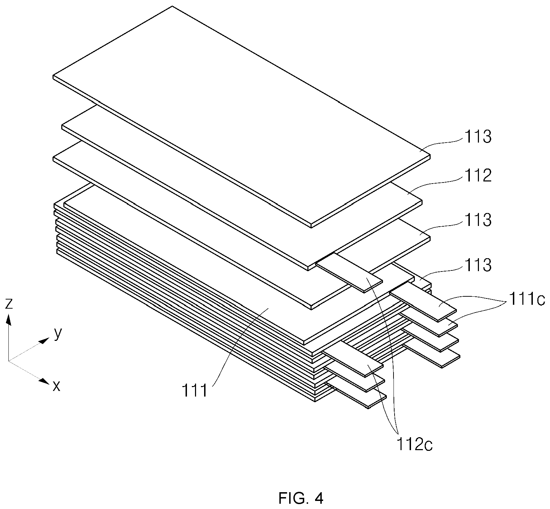

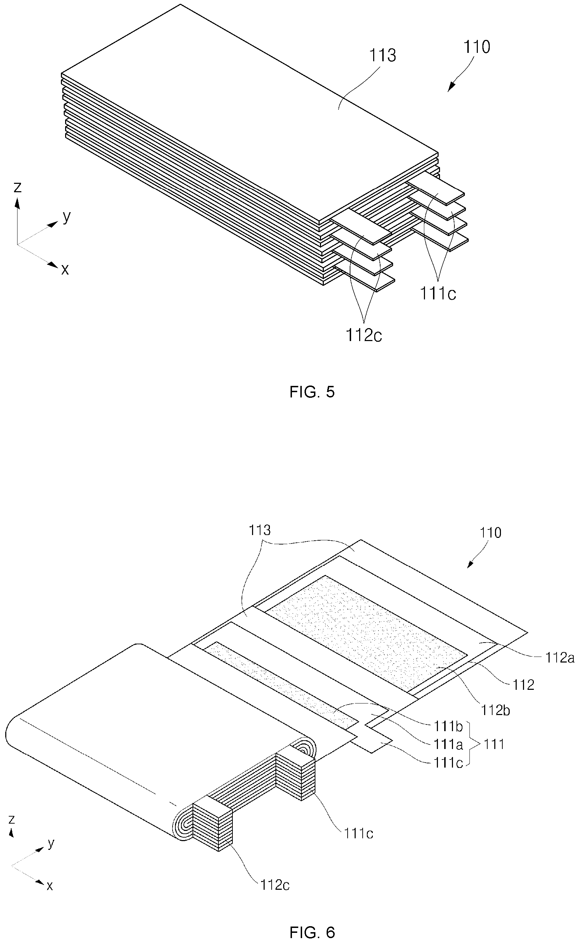

An exploded perspective view and a perspective view of the electrode assembly 110 applicable to the secondary battery 100 are shown in FIGs. 4 and 5, respectively. As shown in FIGs. 4 and 5, the electrode assembly 110 may include a negative electrode plate 112, a positive electrode plate 111, and a separator 113 between the negative electrode plate 112 and the positive electrode plate 111. The electrode assembly 110 may be a stacked type electrode assembly in which a stack of a negative electrode plate 112, a separator 113, and a positive electrode plate 111 is repeatedly stacked a plurality of times. In other embodiments, as shown in FIG. 6, the electrode assembly 110 may be a roll type electrode assembly in which a stack of a negative electrode plate 112, a separator 113, and a positive electrode plate 111 is wound. The electrode assembly 110 depicted in FIG. 6 may be referred to as a jelly roll.

The stacked type electrode assembly 110 shown in FIGs. 4 and 5 will be described. The electrode assembly 110 may be formed by sequentially stacking a positive electrode plate 111, a separator 113, and a negative electrode plate 112, each of which is formed in the shape of a thin plate or a film, in a cuboidal shape. The electrode assembly 110 may be formed in a cuboidal shape by sequentially stacking a separator 113, a positive electrode plate 111, a separator 113, and a negative electrode plate 112 a plurality of times in a third direction z.

The positive electrode plate 111 may be formed by applying a positive electrode active material, such as graphite or carbon, to a positive electrode current collector made of metal foil, such as aluminum. The positive electrode active material may be formed on one surface or opposite surfaces of the positive electrode current collector; however, the disclosure is not limited thereto. In one or more embodiments, a chalcogenide compound may be used as the positive electrode active material. In one or more embodiments, a composite metal oxide, such as LiCoO₂, LiMn₂O₄, LiNiO₂, or LiNiMnO₂, may be used as the positive electrode active material. A positive electrode uncoated portion to which no positive electrode active material is applied may be formed at a portion of the positive electrode current collector. The positive electrode current collector may include a positive electrode uncoated portion 111c, which is a part to which no positive electrode active material is applied. The positive electrode uncoated portion 111c may be a positive electrode tab 111c, which is a passage for current to flow between the positive electrode plate 111 and the outside of the positive electrode. The positive electrode tab 111c may protrude from one end of the positive electrode plate 111 in a first direction x. The positive electrode tab 111c may be located at one end of the positive electrode plate 111 in the first direction x on one side of the positive electrode plate 111 in a second direction y. In the electrode assembly 110, positive electrode tabs 111c of a plurality of stacked positive electrode plates 111 may be aligned or substantially aligned at the same position in the third direction z.

The plurality of positive electrode tabs 111c may be electrically connected to a single positive electrode lead tab 130, and may extend and protrude from the inside of the case 120 in an outward direction. The positive electrode lead tab 130 may be formed in the shape of a flat plate having a thickness greater than the thickness of each positive electrode tab 111c. An insulating tape 131 may be between the positive electrode lead tab 130 and the case 120. The insulating tape 131 may ensure electrical isolation between the case 120 and the positive electrode lead tab 130.

A positive electrode active material 111b may be applied to a positive electrode current collector, which is roll type metal foil, and an individual positive electrode plate 111 having a single positive electrode tab 111c may be formed by punching. The positive electrode plate 111 may have a smaller size in the first direction x and the second direction y (i.e., the width and length directions) than the negative electrode plate 112 in consideration of a lithium ion precipitation phenomenon that may intermittently occur on the negative electrode plate 112 during charging. The negative electrode plate 112 may have a larger planar size than the positive electrode plate 111.

The negative electrode plate 112 may be formed by applying a negative electrode active material 112b, such as a transition metal oxide, to a negative electrode current collector made of metal foil, such as copper or nickel, and may include a negative electrode uncoated portion 112c, which is a part to which no negative electrode active material is applied. In one or more embodiments, a carbon-based material, silicon (Si), tin (Sn), tin oxide, a tin alloy composite, a transition metal oxide, lithium metal nitride, or a metal oxide may be used as the negative electrode active material. The negative electrode uncoated portion 112c may be a negative electrode tab 112c, which is a passage for current to flow between the negative electrode plate 111 and the outside of the negative electrode. The negative electrode tab 112c may protrude from one end of the negative electrode plate 112 in the first direction x. The negative electrode tab 112c may be located at one end of the negative electrode plate 112 in the first direction x and on one side of the negative electrode plate 112 in the second direction y. The negative electrode tabs 112c may be on a side of the negative electrode plate 112 that is opposite to the side of positive electrode plate 111 from which the positive electrode tabs 111c extend. The negative electrode tab 112c may protrude in the same direction as the positive electrode tab 111c, and may be parallel (or substantially parallel) to the positive electrode tab 111c. In the electrode assembly 110, negative electrode tabs 112c of a plurality of stacked negative electrode plates 112 may be aligned (or substantially aligned) at the same position in the third direction z.

A negative electrode active material may be applied to a negative electrode current collector, which is roll type metal foil, and an individual negative electrode plate 112 having a single negative electrode tab 112c may be formed by punching.

The plurality of negative electrode tabs 112c may be electrically connected to a single negative electrode lead tab 140, and may extend and protrude from the inside of the case 120 in an outward direction. The negative electrode lead tab 140 may be formed in the shape of a flat plate having a thickness greater than the thickness of each negative electrode tab 112c. An insulating tape 141 may be between the negative electrode lead tab 140 and the case 120. The insulating tape 141 may ensure electrical isolation between the case 120 and the negative electrode lead tab 140.

The separator 113 may be located between the positive electrode plate 111 and the negative electrode plate 112 to prevent electrical short circuit and to enable movement of transition metal ions, and may be made of polyethylene, polypropylene, or a composite film of polyethylene and polypropylene. The present disclosure, however, is not limited to these materials of the separator 113.

In order to more reliably prevent a short circuit between the positive electrode plate 111 and the negative electrode plate 112, the separator 113 may be formed with a larger width and length than the positive electrode plate 111 and the negative electrode plate 112 in both the first direction x and the second direction y. That is, the separator 113 may have a larger planar size than each of the positive electrode plate 111 and the negative electrode plate 112.

The separator 113 may be formed such that the thickness of one end of the separator 113 in the first direction x is greater than the thickness of the remaining part of the separator 113. In one or more embodiments, an entirety of one end of the separator 113 in the first direction x may have an insulating portion with a larger thickness than the remaining part of the separator 113. The insulating portion may overlap a part of each of the positive electrode tab 111c and the negative electrode tab 112c in the third direction z. The insulating portion may overlap the portion of the positive electrode tab 111c adjacent to the positive electrode current collector in the third direction z, and may overlap the part of the negative electrode tab 112c adjacent to the negative electrode current collector in the third direction z.

FIG. 6 is an exploded perspective view showing another embodiment of the electrode assembly of the secondary battery. The electrode assembly 110 shown in FIG. 6 may be formed by stacking a positive electrode plate 111, a separator 113, and a negative electrode plate 112 and winding the stack into a jelly roll.

The positive electrode plate 111 may be formed by applying a positive electrode active material 111b, such as a transition metal oxide, to a positive electrode current collector 111a made of metal foil, such as aluminum, and may include a positive electrode uncoated portion 111c or a positive electrode tab 111c, which is a part to which the positive electrode active material 111b is not applied. The positive electrode tab 111c may include a plurality of positive electrode tabs 111c, and the positive electrode tabs 11c may be located at one end of the electrode assembly 110 in the first direction x and on one side of the electrode assembly 110 in the second direction y. In the electrode assembly 110, positive electrode tabs 111c of the wound positive electrode plates 111 may be aligned (or substantially aligned) at the same position in the third direction z.

The negative electrode plate 112 may be formed by applying a negative electrode active material 112b, such as a transition metal oxide, to a negative electrode current collector 112a made of metal foil, such as copper or nickel, and may include a negative electrode uncoated portion 112c or a negative electrode tab 112c, which is a part to which the negative electrode active material 112b is not applied. The negative electrode tab 112c may include a plurality of negative electrode tabs 112c, and the negative electrode tabs 112c may be located at one end of the electrode assembly 110 in the first direction x and on one side of the electrode assembly 110 in the second direction y. The negative electrode tabs 112c may be on a side of the negative electrode plate 112 that is opposite to the side of positive electrode plate 111 from which the positive electrode tabs 111c extend. In the electrode assembly 110, negative electrode tabs 112c of the wound negative electrode plates 112 may be aligned (or substantially aligned) at the same position in the third direction z.

The separator 113 may be between the positive electrode plate 111 and the negative electrode plate 112 to prevent an electrical short circuit and to enable movement of transition metal ions. The separator 113 may be similar to the separator 113 described with reference to FIGs. 4 and 5.

The case 120 may be made of a rectangular film extending in the first direction x, which is a longitudinal direction of the case 120, and may include a case body 121 and a case cover 122, which are hingedly coupled to each other.

The electrode assembly 110 may be accommodated in a recess 123 in the case body 121 of the case 120, and the case cover 122 may be folded and coupled to the case body 121 such the case 120 is sealed. The case 120 may be referred to herein as a pouch for secondary batteries.

The case 120 may be formed by folding a rectangular film extending in the first direction x about or relative to a folding portion 124 extending in the second direction y, which is a direction perpendicular (or substantially perpendicular) to the first direction x and a width direction of the case 120. In one or more embodiments, the case body 121 and the case cover 122 may be separate members, and the folding portion 124 may not be provided. In the present disclosure, the case 120 is not limited only to an integral type case in which the case body 121 and the case cover 122 are formed on or from a single film. Hereinafter, however, an example in which the case body 121 and the case cover 122 are formed on a single rectangular film will be described for convenience of description.

The case cover 122 may have a rectangular flat shape. The case cover 122 may contact and may be coupled to the case body 121 via the folding portion 124. The case cover 122 may cover an upper part of the case body 121.

The case body 121 may include a recess 123 and an extension portion 125 around a portion or portions of the recess 123. The case body 121 may include a recess 123 in approximately the center where the electrode assembly 110 is received and an extension portion 125 extending from three sides of the recess 123 approximately in an outward direction. For convenience, an edge of the case body 121 that is located outward in a plane about the recess 123 that is sealed with an edge of the case cover 122 is defined as the extension portion 125. The extension portion 125 may be a plane parallel to (or substantially parallel to) and coupled to the case cover 122. The recess 123 of the case body 121 may be formed by pressing or drawing so as to have a sufficient size to receive the electrode assembly 110. In one or more embodiments, the extension portion 125 may extend from the four sides of the recess 123 in the outward direction.

In one or more embodiments in which the case body 121 and the case cover 122 are separate members, the extension portion 125 may be provided at the part where the folding portion 124 is located. If the case body 121 and the case cover 122 are integrated into a single component, the extension portion 125 may be provided at the case body 121 adjacent to the folding portion 124. In one or more embodiments, however, the extension portion 125 may not be provided at the case body 121 adjacent to the folding portion 124.

Each of the case cover 122 and the case body 121 may include an inner layer 120a, a metal layer 120b, and an outer layer 120c. The inner layer 120a and the outer layer 120c may be formed on one surface and the other surface (i.e., opposite surfaces) of the metal layer 120b, respectively. The metal layer 120b may be between the inner layer 120a and the outer layer 120c. The case cover 122 and the case body 121 may have the inner layers 120a on the surfaces thereof facing each other and the outer layers 120c on the surfaces thereof facing the outside (e.g., facing away from each other). The case cover 122 and the case body 121 may have the same layer structure. The metal layer 120b may be a layer configured to maintain the mechanical strength of the case 120 and to block the introduction and discharge of gas into and from the case. The metal layer 120b may include stainless steel (e.g. SUS, SUS304, SAE 304 stainless steel) or steel having a plating layer formed on the surface thereof. Because the case 120 includes the metal layer 120b made of stainless steel or steel having a plating layer formed on the surface thereof, the case 120 may have a lower expansion rate compared to conventional aluminum in an event in which gas is generated in the battery due and the pressure in the battery increases.

Because the metal layer 120b is made of stainless steel or steel having a plating layer formed on the surface thereof, rigidity of the case 120 may be increased compared to an otherwise comparable case in which conventional aluminum is used.

The inner layer 120a may be a layer configured to protect the metal layer 120b from the electrolytic solution. The inner layer 120a may include a polypropylene-based resin to stabilize the thermally fusible, heat-resistant, and chemical-resistant properties of the battery; however, the disclosure is not limited thereto. The outer layer 120c may be a layer configured to protect the metal layer 120b from the external environment. The outer layer 120c may include a polyethylene terephthalate (PET) resin and/or a nylon resin in consideration of heat resistance, pinhole resistance, abrasion resistance, and the like; however, the disclosure is not limited thereto.

The case cover 122 may cover the part of the case body 121 in which the recess 123 is formed, and the edge of the recess 123 and the edge of the case cover 122 may be thermally fused to each other. The inner layer 120a of the case body 121 and the inner layer 120a of the case cover 122 may be in contact with each other and coupled to each other by thermal fusion along the extension portion 125.

In an embodiment in which the extension portion 125 and the case cover 122 are in contact with each other and thermally fused to each other, the insulating tapes 131 and 141 of the positive electrode lead tab 130 and the negative electrode lead tab 140 may be between the extension portion 125 and the case cover 122. The portion of the case 120 sealed by fusion (fusion welding) between the extension portion 125 and the case cover 122 may be referred to as a sealed portion 126. Fusion welding is a generic term for welding processes that rely on melting to join materials of similar compositions and melting points. Herein, fusion welding may preferably include conduction welding, also known as laser beam welding or radiation welding. The case 120 may be provided on at least three sides thereof with sealed portions 126.

The case 120 may have at least one vent 129 in the sealed portion 126. The vent 129 may be a part of the sealed portion 126 that is subject to a lower coupling force due to fusion than the remaining part of the sealed portion 126. The sealed portion 126 may include a first sealed portion 126a located on one side from which the positive electrode lead tab 130 and the negative electrode lead tab 140 protrude. The first sealed portion 126a extends in the second direction y. The sealed portion 126 may also include two second sealed portions 126b configured to connect opposite ends of the first sealed portion 126a and the folding portion 124 to each other. the second sealed portions 126b extend in the first direction x. The first sealed portion 126a may connect corresponding ends of the two second sealed portions 126b to each other. The length of the second sealed portion 126b in the first direction x may be greater than the length of the first sealed portion 126a in the second direction y (e.g., the second sealed portions 126b may be longer than the first sealed portion 126a). The case 120 may be most affected by an increase in the internal pressure of the case 120 in approximately the center of the second sealed portion 126b, which has a larger length than the first sealed portion 126a.

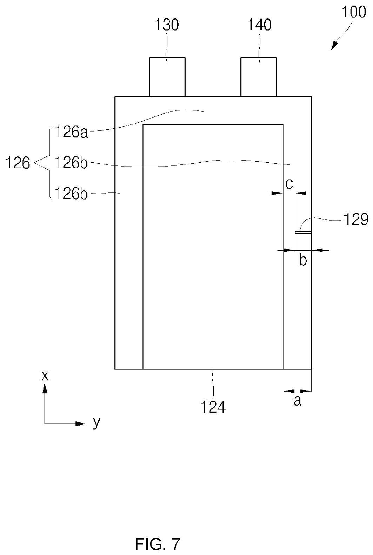

In one or more embodiments, as shown in FIG. 7, in the secondary battery 100, the vent 129 may be located in approximately the center of one of the second sealed portions 126b in the first direction x. In the case 120, the vent 129 may be located in the center (or substantially or approximately the center) of the second sealed portion 126b in the first direction x, which is most affected by the internal pressure during an event. Although the expansion rate of the case 120 is low because the metal layer 120b is made of stainless steel or steel having a plating layer formed on the surface thereof, the vent 129 may be located in approximately the center of the second sealed portion 126b, which is most affected by the internal pressure, to facilitate breaking of the vent 129. In FIG. 7, the vent 129 is shown as being located in the second sealed portion 126b on the right side if the first sealed portion 126a is located on the upper side, but the vent may be located in the second sealed portion 126b on the left side.

The vent 129 may be an incision (e.g., a notch) cut approximately perpendicularly from the edge of the sealed portion 126. The vent 129 may be perpendicular (or substantially perpendicular) to a direction in which the sealed portion 126 extends. Due to the incision, the vent 129 may have lower coupling force between the case cover 122 and the case body 121 due to fusion (fusion welding) than the remaining part of the sealed portion 126. The length b of the vent 129 may not exceed approximately 50% of the width a of the sealed portion 126 in the y direction. The width c of the sealed portion 126 in the portion where the vent 129 is provided may be less than the width a of the sealed portion 126 in the remaining portion of the sealed portion 126. The width c of the sealed portion 126 in the part where the vent 129 is provided may be at least approximately 50% of the width a of the sealed portion 126 in the remaining portion of the sealed portion 126. In one or more embodiments, the vent 129 may include an incision (e.g., a notch) oriented at a certain angle with respect to an extension direction of the sealed portion 126.

The vent 129 may be formed by cutting the sealed portion 126 of the case 120 using general cutting equipment after the sealed portion 126 is fused. The vent 129 may include an adhesive or a UV-curable material in order to prevent (or at least mitigate) moisture from penetrating into the exposed metal layer 120b after a part of the sealed portion 126 is cut. In one or more embodiments, in the vent 129, a thermally fused layer located at the sealed portion 126 of the case 120 may have a fusion pattern having a smaller width than the remaining portion of the sealed portion 126. The vent 129 may have lower coupling force between the case cover 122 and the case body 121 due to the fusion pattern than the remaining part of the sealed portion 126.

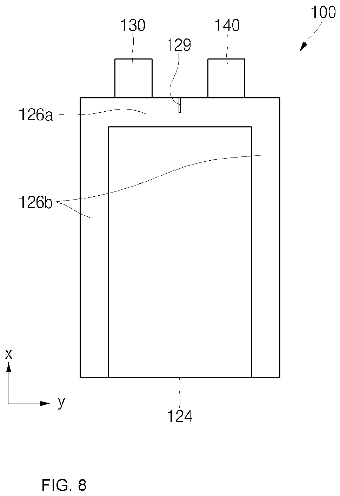

In one or more embodiments, as shown in FIG. 8, in the secondary battery 100, the vent 129 may be located in approximately the center of the first sealed portion 126a in the second direction y. The vent 129 may be located in the first sealed portion 126a between the positive electrode lead tab 130 and the negative electrode lead tab 140. The vent 129 may be located between the positive electrode lead tab 130 and the negative electrode lead tab 140, which are the most susceptible to degradation in the sealed portion 126, and thus may be more susceptible to increased internal pressure. The shape and structure of the vent 129 may be similar to those of the previously described vent 129. However, the difference is that the vent 129 is provided in the first sealed portion 126a rather than one of the second sealed portions 126b.

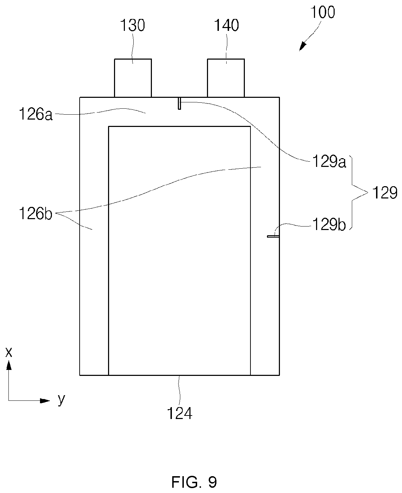

In one or more embodiments, as shown in FIG. 9, the vent 129 may be located in each of the first sealed portion 126a and the second sealed portion 126b of the secondary battery 100. A plurality of vents 129 may be provided in the secondary battery 100. The vents 129 may include a first vent 129a located in substantially the center of the first sealed portion 126a in the second direction y, which is most affected by the internal pressure of the case 120, and a second vent 129b located in substantially the center of the second sealed portion 126b in the first direction x. In the secondary battery 100, the vent 129 that is more affected by the internal pressure, among the plurality of vents 129, may be opened first, depending on the type and position of an event occurring in the case 120. The first vent 129a may be similar in configuration to the vent shown in FIG. 8, and the second vent 129b may be similar in configuration to the vent shown in FIG. 7.

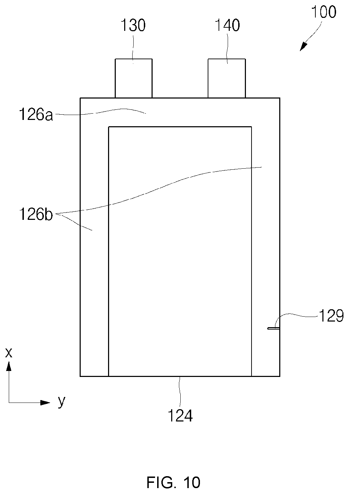

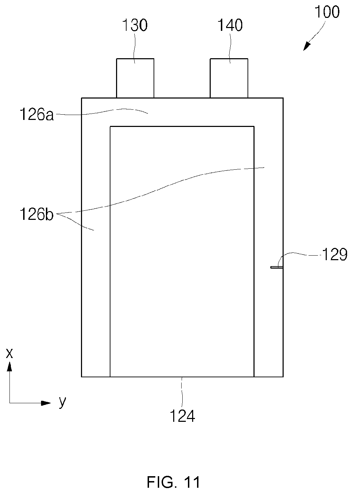

In one or more embodiments, as shown in FIGs. 10 and 11, the vent 129 may be spaced apart in the first direction x from the center of the second sealed portion 126b, which is less affected by the internal pressure of the case 120 of the secondary battery 100. The vent 129 may be located between the center of the second sealed portion 126b and the folding portion 124. The vent 129 may be opened if the case 120 expands further than if the vent is located in the center of the second sealed portion 126b. The vent 129 may be opened by lower internal pressure if the vent is located closer to the center of the second sealed portion 126b, as shown in FIG. 10, than if the vent is located closer to the folding portion 124, as shown in FIG. 11. The position of the vent 129 may be variously changed to control the time during which the vent 129 is open after an increase in internal pressure occurs. However, as shown in FIG. 7, the vent 129 may be opened most quickly if the vent is located in the center of the second sealed portion 126b, which may improve stability. In FIGs. 10 and 11, the vent 129 is shown as being located in the second sealed portion 126b on the right side if the first sealed portion 126a is located on the upper side, but the vent may be located on the second sealed portion 126b on the left side.

As is apparent from the above description, in a secondary battery according to various embodiments of the present disclosure, a vent is provided in a fusion welded sealed portion between the case cover and the case body and the vent having lower coupling force than the sealed portion, such that the vent is easily broken when the case, which is for instance made of stainless steel or steel with a plating layer formed on the surface thereof, expands by internal pressure, thereby improving safety.

The effects of the disclosure are not limited to those described above, and other unmentioned technical effects will be apparent to those skilled in the art from the above description of exemplary embodiments.

The above is only one embodiment for implementing a secondary battery according to the disclosure, the disclosure is not limited to the above embodiment, and there is a technical of the disclosure to the extent that various modifications can be made by anyone having ordinary skill in the art to which the disclosure pertains without departing from the scope of the disclosure as claimed in the following claims.

## Claims

1. A secondary battery (100) comprising:
an electrode assembly (110) comprising a positive electrode plate (111), a negative electrode plate (112), and a separator (113) between the positive electrode plate (111) and the negative electrode plate (112); and
a case (120) configured to accommodate the electrode assembly (110), the case (120) comprising a metal layer (120b),
wherein the case (120) comprises a sealed portion (126) sealed by fusion welding on at least three sides of the case (120), and
wherein the sealed portion (126) comprises at least one vent (129).

2. The secondary battery (100) as claimed in claim 1, wherein the metal layer (120b) comprises stainless steel or steel having a plating layer.

3. The secondary battery (100) as claimed in claims 1 or 2, wherein the at least one vent (129) is in substantially a center of one side of the sealed portion (126).

4. The secondary battery (100) as claimed in at least one of the preceding claims, comprising:
a positive electrode lead tab (130) coupled to and electrically connected to the positive electrode plate (111) of the electrode assembly (110), a portion of the positive electrode lead tab (130) being exposed outside the case (120); and
a negative electrode lead tab (140) coupled to and electrically connected to the negative electrode plate (112) of the electrode assembly (110), a portion of the negative electrode lead tab (140) being exposed outside the case (120), wherein
wherein the positive electrode lead tab (130) and the negative electrode lead tab (140) are exposed outside the case (120) through a same side of the sealed portion (126).

5. The secondary battery (100) as claimed in claim 4, wherein the at least one vent (129) is between the positive electrode lead tab (130) and the negative electrode lead tab (140).

6. The secondary battery (100) as claimed in claims 4 or 5, wherein the sealed portion (126) comprises:
a first sealed portion (126a) extending in a second direction, the second direction being a width direction of the case (120), the first sealed portion (126a) being on the same side from which the positive electrode lead tab (130) and the negative electrode lead tab (140) are exposed; and
two second sealed portions (126b) extending from one end of the first sealed portion (126a) another end of the first sealed portion (126a), opposite to the one end, in a first direction, is the first direction being a longitudinal direction of the case (120).

7. The secondary battery (100) as claimed in claim 6, wherein the at least one vent (129) is in substantially a center of the first sealed portion (126a), preferably, along the second direction; and/or
the at least one vent (129) is in substantially a center of any one of the second sealed portions (126b), preferably, along the first direction; or
the at least one vent (129) is spaced apart from a center of the second sealed portion (126b) along the first direction.

8. The secondary battery (100) as claimed in at least one of the preceding claims, wherein the at least one vent (129) comprises a notch in an edge of the sealed portion (126).

9. The secondary battery (100) as claimed in claim 8, wherein the notch of the vent (129) is covered by an adhesive or a UV-curable material.

10. The secondary battery (100) as claimed in claim 8 or 9, wherein the notch of the vent (129) is substantially perpendicular or at a predetermined angle from the edge.

11. The secondary battery (100) as claimed in at least one of claims 8 to 10 , wherein a width of the sealed portion (126) in a portion where the vent (129) is located is at least approximately 50% of a width of the sealed portion (126) in a remaining portion of the sealed portion (126).

12. The secondary battery (100) as claimed in at least one of the preceding claims, wherein a pattern of a thermally fused layer of the sealed portion (126) at a portion where the vent (129) is located has a smaller width than at a remaining portion of the sealed portion (126).

13. The secondary battery (100) as claimed in at least one of the preceding claims, wherein the case (120) comprises:
a case body (121) comprising a recess (123) configured to accommodate the electrode assembly (110) and an extension portion (125) extending from the recess (123) in an outward direction; and
a case cover (122) coupled to the extension portion (125) of the case body (121) by fusion welding, and
wherein the sealed portion (126) is a portion where the extension portion (125) and the case cover (122) are coupled to each other by the fusion welding.

14. The secondary battery (100) as claimed in claim 13, wherein each of the case body (121) and the case cover (122) has a multilayered structure including a stack comprising an inner layer (120a) including an insulating and thermally fused layer, a metal layer (120b) including stainless steel or steel with a plating layer, and an outer layer (120c) including an insulating material.

15. The secondary battery (100) as claimed in at least one of the preceding claims, wherein the vent (129) comprises a plurality of vents (129) in the sealed portion (126).
